(19) Europäisches Patentamt / European Patent Office / Office européen des brevets

(11) **EP 4 131 509 A1**

(12) **EUROPEAN PATENT APPLICATION**
published in accordance with Art. 153(4) EPC

(43) Date of publication:
**08.02.2023 Bulletin 2023/06**

(21) Application number: **20928298.7**

(22) Date of filing: **30.03.2020**

(51) International Patent Classification (IPC):
**H01M 4/64** (1974.07)   **H01M 10/0525** (2010.01)

(52) Cooperative Patent Classification (CPC):
**H01M 4/64; H01M 10/0525; Y02E 60/10**

(86) International application number:
**PCT/CN2020/082187**

(87) International publication number:
**WO 2021/195881 (07.10.2021 Gazette 2021/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited Ningde, Fujian 352100 (CN)**

(72) Inventors:
• **CHEN, Maohua**
  **Ningde, Fujian 352100 (CN)**
• **LI, Daguang**
  **Ningde, Fujian 352100 (CN)**
• **XIE, Yuansen**
  **Ningde, Fujian 352100 (CN)**

(74) Representative: **Klunker IP Patentanwälte PartG mbB Destouchesstraße 68 80796 München (DE)**

(54) **NEGATIVE POLE PIECE AND ELECTROCHEMICAL DEVICE CONTAINING SAME**

(57)    A negative electrode plate and an electrochemical apparatus including the negative electrode plate are disclosed. Specifically, the negative electrode plate includes: a current collector (101); and a negative electrode framework located on the current collector (101), where the negative electrode framework includes at least a first negative electrode framework layer (102) and a second negative electrode framework layer (103), the first negative electrode framework layer (102) is located between the current collector (101) and the second negative electrode framework layer (103), and a porosity of the first negative electrode framework layer (102) is higher than a porosity of the second negative electrode framework layer (103). With this design, side reactions between lithium metal and an electrolyte can be reduced, formation of lithium dendrites can be inhibited, and drastic swelling and contraction of the negative electrode plate in volume due to intercalation and deintercalation of lithium ions can be greatly alleviated or even eliminated, thereby improving safety and stability of the electrochemical apparatus.

FIG. 4

EP 4 131 509 A1

**Description**

**TECHNICAL FIELD**

This application relates to the field of energy storage technologies, and more specifically, to a negative electrode plate and an electrochemical apparatus including the negative electrode plate.

**BACKGROUND**

With constant progress of science and technology and increasing requirements for environmental protection, electrochemical apparatuses play an increasingly important role in our daily life. Lithium-ion batteries are widely used in the field of consumer electronics by virtue of their advantages such as high specific energy, high working voltage, low self-discharge rate, small size, and light weight. However, with rapid development of electric vehicles and mobile electronic devices, people have increasingly high requirements for energy density, safety, cycling performance, and other aspects of the electrochemical apparatuses. Volume energy density and mass energy density are important parameters for measuring performance of the electrochemical apparatuses.

Lithium metal is metal with the smallest relative atomic mass (6.94) and the lowest standard electrode potential (-3.045 V) among all metal elements, and a theoretical capacity per gram of the lithium metal can reach 3860 mAh/g. Therefore, energy density and a working voltage of an electrochemical apparatus can be greatly increased by using the lithium metal as a negative electrode of the electrochemical apparatus, in combination with some positive electrode materials with high energy density. However, in actual commercial application, various problems may occur in a charge and discharge cycling process when the lithium metal is used as a negative electrode plate of an electrochemical apparatus, which prevents commercialization of the lithium metal as a negative electrode active material.

**SUMMARY**

It is found in this application that when lithium metal is used as a negative electrode active material of an electrochemical apparatus, the following problems may occur during a charge and discharge process of the electrochemical apparatus:

(1) The lithium metal is very active and is very likely to have a side reaction with an electrolyte in the electrochemical apparatus, resulting in simultaneous consumption of the lithium metal and the electrolyte, and making coulombic efficiency of cycling much lower than that of a general electrochemical apparatus with graphite as a negative electrode active material.

(2) In the charge and discharge process of the electrochemical apparatus, the lithium metal is precipitated on a surface of a negative electrode plate. Due to non-uniformity of current density and lithium-ion concentration in the electrolyte, a precipitation speed at some sites is too high, forming a sharp lithium dendrite structure. The formation of the lithium dendrite causes a decrease in energy density of the electrochemical apparatus, and the lithium dendrite may even pierce a separator in the electrochemical apparatus to cause a short circuit, leading to safety problems.

(3) In the charge and discharge process of the electrochemical apparatus, the negative electrode plate drastically swells and contracts. According to a general design of a current commercial lithium-ion battery, in a process in which the electrochemical apparatus changes from a fully charged state to a fully discharged state, a thickness of a negative electrode coated with lithium metal on a single side varies from 8 $\mu$m to 100 $\mu$m. As a result, interface debonding occurs between a lithium metal negative electrode active layer and an adjacent structure thereof (for example, a current collector), greatly increasing impedance of the electrochemical apparatus, and reducing stability of the electrochemical apparatus.

In view of the foregoing problems, this application provides a negative electrode plate and an electrochemical apparatus including the negative electrode plate to resolve at least one of the foregoing problems at least to some extent.

In some embodiments, this application provides a negative electrode plate, including: a current collector; and a negative electrode framework located on the current collector, where the negative electrode framework includes at least a first negative electrode framework layer and a second negative electrode framework layer, the first negative electrode framework layer is located between the current collector and the second negative electrode framework layer, and a porosity of the first negative electrode framework layer is higher than a porosity of the second negative electrode framework layer.

In some embodiments, this application provides an electrochemical apparatus, including the negative electrode plate in the foregoing embodiments.

In some embodiments, this application provides an electronic apparatus, including the electrochemical apparatus in the foregoing embodiments.

This application constructs a special negative electrode framework for a lithium-metal negative electrode, where the negative electrode framework is located on a current collector and includes at least two layers with different porosities: a first negative electrode framework layer (for example, the first negative electrode framework layer is close to the current collector, and may also be referred to as an "inner layer") and a second negative electrode framework layer (for example, the second negative electrode framework layer is farther away from the current collector than the first negative electrode framework layer, and may also be referred to as an "outer layer"). The first negative electrode framework layer in this application has a high porosity and can implement the following functions:

(1) The first negative electrode framework layer has a high porosity, which can provide sufficient space for precipitation of lithium metal during charging, and form stable structural support in a process of continuous reduction of lithium metal at the negative electrode during discharging. Therefore, in a charge and discharge process of an electrochemical apparatus, a negative electrode plate does not undergo a drastic volume change, or even undergoes no volume change. Therefore, this alleviates or even eliminates a drastic volume change in the lithium-metal negative electrode in the charge and discharge process of the electrochemical apparatus.

(2) The first negative electrode framework layer has a high porosity, which can provide a good transport channel for ions and electrons. In addition, the first negative electrode framework layer has a large specific surface area, which can effectively disperse currents in a charge and discharge process, reduce current density, and form a more uniform electric field, thereby improving uniformity of lithium precipitation and inhibiting growth of lithium dendrites.

(3) The first negative electrode framework layer has a high porosity, which can provide a large number of nucleation sites and reduce current density, thereby effectively increasing density of precipitated lithium.

The second negative electrode framework layer in this application has a low porosity and can implement the following functions:

(1) Similar to the first negative electrode framework layer, precipitation space can be provided for lithium metal in a charge and discharge process, and drastic volume changes can be greatly reduced or eliminated. In addition, current density can be reduced, growth of lithium dendrites can be inhibited, and lithium precipitation density can be increased.

(2) The second negative electrode framework layer has a denser framework structure than the first negative electrode framework layer, which helps form a dense electrode surface, reduce side reactions between lithium metal and an electrolyte, and improve cycling stability of the electrode. In addition, a negative electrode protection layer may be further formed on the dense electrode surface of the second negative electrode framework layer to further reduce side reactions between the lithium metal and the electrolyte and improve cycling stability of the electrode.

## BRIEF DESCRIPTION OF DRAWINGS

To describe embodiments of this application, the following briefly describes the accompanying drawings required for describing the embodiments of this application or the prior art. The accompanying drawings described below are merely some embodiments of this application.

FIG. 1 is a schematic top view of a punched negative electrode current collector according to some embodiments of this application;

FIG. 2 is a schematic top view of a first negative electrode framework layer constructed on the negative electrode current collector shown in FIG. 1 according to some embodiments of this application;

FIG. 3 is a schematic top view of a second negative electrode framework layer constructed on the first negative electrode framework layer shown in FIG. 2 according to some embodiments of this application;

FIG. 4 is a schematic cross-sectional view of a negative electrode plate cut along a line A-A' shown in FIG. 3 according to some embodiments of this application;

FIG. 5 is a schematic cross-sectional view of a negative electrode plate in which negative electrode frameworks are provided on both sides of a current collector according to some embodiments of this application;

FIG. 6 is a schematic cross-sectional view of a negative electrode plate including more layers of negative electrode frameworks according to some embodiments of this application; and

FIG. 7 is a schematic cross-sectional view of a negative electrode plate in which a negative electrode protection layer is provided on a surface of a negative electrode framework according to some embodiments of this application.

## DESCRIPTION OF EMBODIMENTS

To make the objectives, technical solutions, and advantages of this application clearer, the following clearly and completely describes the technical solutions in this application with reference to the embodiments of this application. Apparently, the described embodiments are some but not all of the embodiments of this application. All other embodiments obtained by persons skilled in the art based on the technical solutions provided by this application and the given embodiments without creative efforts shall fall within the protection scope of this application.

In this specification, unless otherwise specified or limited, relative terms such as "central", "longitudinal", "lateral", "front", "rear", "right", "left", "inner", "outer", "lower", "higher", "horizontal", "vertical", "higher than", "lower than", "above", "below", "top", "bottom", and derivative terms thereof (for example, "horizontally", "downward", and "upward") should be construed as reference to a direction described in the discussions or depicted in the accompanying drawings. These relative terms are merely used for ease of description, and do not require the construction or operation of this application in a specific direction.

In addition, for ease of description, "first", "second", "third", and the like may be used to distinguish between different components in one drawing or a series of drawings in this specification. "First", "second", "third", and the like are not intended to describe corresponding components.

In the embodiments and claims of this application, the terms "about", "roughly", "substantially", and "approximately" are used to describe and represent small variations. When used in combination with an event or a circumstance, the terms may refer to an example in which the exact event or circumstance occurs or an example in which an extremely similar event or circumstance occurs. For example, when used in combination with a value, the terms may refer to a variation range of less than or equal to $\pm 10\%$ of the value, for example, less than or equal to $\pm 5\%$, less than or equal to $\pm 4\%$, less than or equal to $\pm 3\%$, less than or equal to $\pm 2\%$, less than or equal to $\pm 1\%$, less than or equal to $\pm 0.5\%$, less than or equal to $\pm 0.1\%$, or less than or equal to $\pm 0.05\%$.

In addition, quantities, ratios, and other values are sometimes presented in the format of ranges in this specification. It should be understood that such range formats are used for convenience and simplicity and should be flexibly understood as including not only values clearly designated as falling within the range but also all individual values or sub-ranges covered by the range as if each value and sub-range are clearly designated.

In the embodiments and claims, a list of items connected by the terms "at least one of", "at least one type of", or other similar terms may mean any combination of the listed items. For example, if items A and B are listed, the phrase "at least one of A and B" means only A; only B; or A and B. In another example, if items A, B, and C are listed, the phrase "at least one of A, B, and C" means only A; only B; only C; A and B (exclusive of C); A and C (exclusive of B); B and C (exclusive of A); or all of A, B, and C. The item A may contain a single constituent or a plurality of constituents. The item B may contain a single constituent or a plurality of constituents. The item C may contain a single constituent or a plurality of constituents.

In an electrochemical apparatus (for example, a lithium-ion battery), energy density of the battery and a working voltage of the battery can be increased by using lithium metal as a negative electrode plate of the electrochemical apparatus. However, various problems may occur in a charge and discharge cycling process of the electrochemical apparatus when the lithium metal is used as the negative electrode plate, for example, side reactions between the lithium metal and an electrolyte, formation of lithium dendrites, and drastic swelling and contraction of the negative electrode plate in volume. The drastic swelling and contraction of the negative electrode plate in volume are likely to cause interface debonding between the negative electrode plate and another adjacent structure, resulting in a drastic increase in impedance and seriously reducing safety and stability of the electrochemical apparatus.

This application provides a negative electrode framework with a multi-layer structure. The negative electrode framework has two or more layers, and different porosity designs are used for the layers, so that a negative electrode framework layer close to a current collector has a higher porosity and a negative electrode framework layer far away from the current collector has a lower porosity.

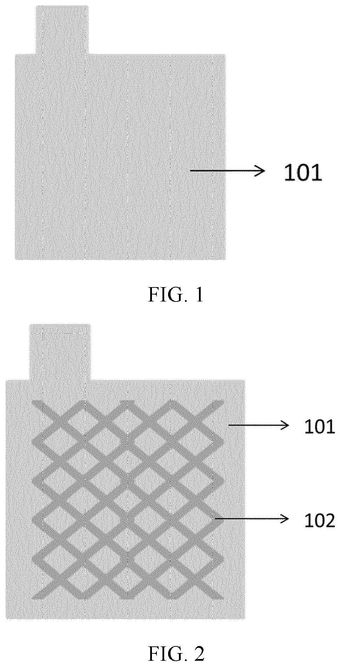

The following describes a structure and beneficial effects of a negative electrode plate in the embodiments of this application with reference to FIG. 1 to FIG. 4.

The negative electrode plate of this application may have a single-sided structure or a double-sided structure, where the single-sided structure means that only one side of a current collector is provided with the negative electrode framework of this application, and the double-sided structure means that both sides of a current collector are provided with the negative electrode framework of this application. FIG. 1 to FIG. 4 are top views and cross-sectional views of a negative electrode plate with a single-sided structure according to some embodiments of this application.

FIG. 1 to FIG. 3 are schematic diagrams of a preparation process of the negative electrode plate of this application. First, FIG. 1 is a top view of a punched negative electrode current collector 101. According to the embodiments of this application, the current collector 101 may be a negative electrode current collector commonly used in the art, and includes but is not limited to nickel foil, tin foil, copper foil, lithium foil, and lithium-coated copper foil.

As shown in FIG. 2, a first negative electrode framework layer 102 with a higher porosity is provided on a surface of the current collector 101.

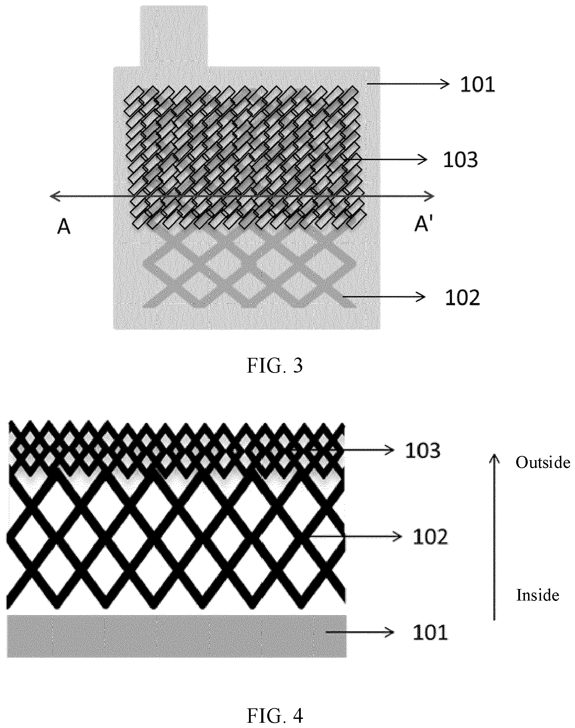

As shown in FIG. 3, a second negative electrode framework layer 103 with a lower porosity is provided on a surface of the first negative electrode framework layer 102. To clearly show the layered structure of the negative electrode framework (that is, to clearly show the first negative electrode framework layer 102 covered by the second negative electrode framework layer 103), FIG. 3 only schematically shows a part of the second negative electrode framework layer 103. However, in one or more embodiments of this application, the second negative electrode framework layer 103 should completely cover the surface of the first negative electrode framework layer 102.

FIG. 4 is a cross-sectional view of the negative electrode plate cut along a line A-A' shown in FIG. 3. As shown in FIG. 4, the negative electrode plate of this application includes the current collector 101 and the negative electrode framework located on the current collector 101, where the negative electrode framework includes at least the first negative electrode framework layer 102 and the second negative electrode framework layer 103, the first negative electrode framework layer 102 is located between the current collector 101 and the second negative electrode framework layer 103, and a porosity of the first negative electrode framework layer 102 is higher than a porosity of the second negative electrode framework layer 103. According to a direction indicated by an arrow from inside to outside in FIG. 4, the first negative electrode framework layer 102 may also be referred to as an inner layer, and the second negative electrode framework layer 103 is referred to as an outer layer.

Pores in the first negative electrode framework layer 102 and the second negative electrode framework layer 103 reserve space for precipitation of lithium metal. In a charge and discharge process of an electrochemical apparatus, the lithium metal as a negative electrode active material is intercalated into and deintercalated from the negative electrode framework constructed in this application, so that a drastic volume change caused by intercalation and deintercalation of lithium ions can be alleviated or even eliminated, thereby effectively avoiding interface debonding and improving safety and stability of the electrochemical apparatus.

In addition, the first negative electrode framework layer 102 has a high porosity, which can provide a good conduction channel for transporting ions and electrons and improve rate performance of the electrochemical apparatus. In addition, the first negative electrode framework layer 102 has a large specific surface area, which can effectively disperse currents in a charge and discharge process, reduce current density, improve uniformity of lithium precipitation, and inhibit formation of lithium dendrites.

The second negative electrode framework layer 103 has a denser framework structure than the first negative electrode framework layer 102. The dense structure of the second negative electrode framework layer 103 can bring at least the following advantages: (1) Similarly, precipitation space can be provided for lithium metal in a charge and discharge process, and drastic volume changes can be greatly reduced or eliminated. In addition, current density can be reduced, growth of lithium dendrites can be inhibited, and lithium precipitation density can be increased. (2) The dense structure helps further form a dense negative electrode protection layer on a surface of the second negative electrode framework layer 103, reduce difficulty of forming the negative electrode protection layer, and reduce side reactions between the lithium metal and an electrolyte, which further improves strength and stability of the lithium-metal negative electrode and improves coulombic efficiency and a cycle life of the electrochemical apparatus.

In some embodiments, the porosity of the first negative electrode framework layer ranges from approximately 55% to approximately 90%.

In some embodiments, the porosity of the second negative electrode framework layer ranges from approximately 10% to approximately 50%. In some embodiments, the porosity of the second negative electrode framework layer ranges from approximately 20% to approximately 50%. In some other embodiments, the porosity of the second negative electrode framework layer ranges from approximately 20% to approximately 40%.

The porosity of the first negative electrode framework layer may be a roughly fixed percentage or a percentage varying within the foregoing range. In some embodiments, when the porosity of the first negative electrode framework layer varies, preferably, the porosity decreases as a relative distance from the current collector increases. The porosity of the second negative electrode framework layer may be a roughly fixed percentage or a percentage varying within the foregoing range. In some embodiments, when the porosity of the second negative electrode framework layer varies, preferably, the porosity decreases as a relative distance from the current collector increases.

In some embodiments, a total thickness of the negative electrode framework ranges from approximately 5 $\mu$m to approximately 100 $\mu$m. In some embodiments, a thickness of the first negative electrode framework layer ranges from approximately 1 $\mu$m to approximately 95 $\mu$m. In some embodiments, a thickness of the second negative electrode framework layer ranges from approximately 0.1 $\mu$m to approximately 50 $\mu$m.

In some embodiments, the thickness of the negative electrode framework and a porosity of the negative electrode framework satisfy the following relationships:

$$5 \le \int_0^t p\,dx \le 50 \quad \text{(Formula 1)};$$

$$\int_0^t \frac{\partial p}{\partial x} dx < 0 \quad \text{(Formula 2)};$$

$$20\% \leq p \leq 90\% \quad \text{(Formula 3)};$$

and

$$5 \leq t \leq 100 \quad \text{(Formula 4)},$$

where t is the total thickness/$\mu$m of the negative electrode framework, x is a distance (integral element)/$\mu$m from a surface of the current collector to any plane that is in the negative electrode framework and that is parallel to the surface of the current collector, and p is the porosity of the negative electrode framework.

The formula 1 indicates that a cumulative thickness of pores provided by the negative electrode framework ranges from 5 $\mu$m to 50 $\mu$m. This can also be understood as that a cumulative thickness for lithium metal precipitation on the negative electrode framework ranges from 5 $\mu$m to 50 $\mu$m. With reference to the directional arrow from inside to outside in FIG. 4, the formula 2 indicates that the porosity of the negative electrode framework decreases from inside to outside. The formula 3 indicates that the porosity of the negative electrode framework ranges from 20% to 90%. The formula 4 indicates that the thickness of the negative electrode framework ranges from 5 $\mu$m to 100 $\mu$m. It should be noted that, in this application, the porosity is calculated only based on a material of the negative electrode framework itself, excluding lithium metal pre-supplemented into the negative electrode framework before first charging and discharging.

In some embodiments, this application provides a negative electrode framework with a porosity gradually decreasing from inside to outside. That is, a thickness and a porosity of the negative electrode framework satisfy the relationship described in the formula (2). In some embodiments of this application, the negative electrode framework of this application further satisfies at least one of the formulas (1), (3) and (4).

In some embodiments, the negative electrode plate further includes lithium metal pre-intercalated (in other words, pre-supplemented) into the negative electrode framework as negative electrode active substance of the electrochemical apparatus, where an amount of the pre-intercalated lithium metal ranges from approximately 0.001 mg/cm$^2$ to approximately 6 mg/cm$^2$. "Pre-intercalation" means that lithium metal is pre-intercalated into the negative electrode framework before first charging and discharging of the negative electrode plate. In some embodiments, the amount of the pre-intercalated lithium metal ranges from approximately 0.005 mg/cm$^2$ to approximately 3 mg/cm$^2$. For example, the amount of the pre-intercalated lithium metal may be approximately 0.005 mg/cm$^2$, approximately 0.01 mg/cm$^2$, approximately 0.1 mg/cm$^2$, approximately 0.5 mg/cm$^2$, approximately 1 mg/cm$^2$, approximately 1.5 mg/cm$^2$, approximately 2 mg/cm$^2$, approximately 2.5 mg/cm$^2$, or approximately 3 mg/cm$^2$.

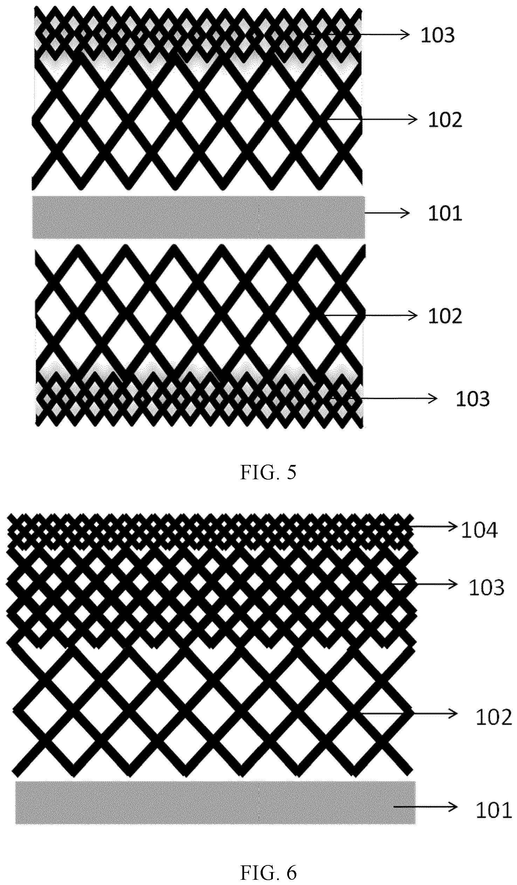

FIG. 5 is a cross-sectional view of a negative electrode plate in which the negative electrode framework of this application is provided on each of two sides of a current collector according to some embodiments of this application.

As shown in FIG. 5, a first negative electrode framework layer 102 and a second negative electrode framework layer 103 are provided on each of surfaces on both sides of the current collector 101, where the first negative electrode framework layer 102 is located between the current collector 101 and the second negative electrode framework layer 103. In some embodiments, negative electrode frameworks provided on both sides of the current collector 101 may be two different negative electrode frameworks.

FIG. 6 is a cross-sectional view of a negative electrode plate including more layers of negative electrode frameworks according to some embodiments of this application.

In some embodiments, the negative electrode plate of this application further includes at least one third negative electrode framework layer 104. As shown in FIG. 6, the third negative electrode framework layer 104 is located on a surface of the second negative electrode framework layer 103.

It should be understood that FIG. 6 shows an example embodiment in which the negative electrode framework of this application has a structure with more than two layers. Although FIG. 6 demonstrates only a negative electrode framework with a three-layer structure, apparently, persons skilled in the art may adjust the number of negative electrode framework layers in the negative electrode plate according to specific requirements under instructions of this application without being limited by the number of negative electrode framework layers shown in the accompanying drawings of this application.

According to this embodiment of this application, the first negative electrode framework layer, the second negative electrode framework layer, and the third negative electrode framework layer each independently include at least one of the following materials: a polymer material, a carbon material, a metal material, or an inorganic material.

In some embodiments, the polymer material includes at least one of the following: polyethylene oxide, polyimide, polyacrylic acid, polyethylene, polypropylene, polyacrylonitrile, polystyrene, polyvinyl fluoride, polyether-ether-ketone, polyester, polyvinylidene chloride, polytetrafluoroethylene, polyethylene terephthalate, or a derivative of one or more of the foregoing polymer materials.

In some embodiments, the carbon material includes at least one of the following: porous carbon, carbon nanotube, carbon fiber, graphene and derivatives thereof, or hollow carbon beads.

In some embodiments, the metal material includes at least one of the following: copper, nickel, chromium, titanium, tungsten, zirconium, or an alloy composed of two or more of the foregoing materials.

In some embodiments, the inorganic material includes at least one of the following: lithium phosphate ($Li_3PO_4$); LiPON; $Li_2O$; LiF; LiOH; $Li_2CO_3$; $LiAlO_2$; $Li_4SiO_4$; $Li_2O$-$Al_2O_3$-$SiO_2$-$P_2O_2$-$TiO_2$-$GeO_2$ ceramics; lithium titanium phosphate ($Li_xTi_y(PO_4)_3$, where $0 < x < 2$, and $0 < y < 3$); lithium aluminum titanium phosphate ($Li_xAl_yTi_z(PO_4)_3$, where $0 < x < 2$, $0 < y < 1$, and $0 < z < 3$); $Li_{1+x+y}(Al, Ga)_x(Ti, Ge)_{2-x}Si_yP_{3-y}O_{12}$, where $0 \le x \le 1$, and $0 \le y \le 1$); lithium lanthanum titanate ($Li_xLa_yTiO_3$, where $0 < x < 2$, and $0 < y < 3$); lithium germanium thiophosphate ($Li_xGe_yP_zS_w$, where $0 < x < 4$, $0 < y < 1$, $0 < z < 1$, and $0 < w < 5$); lithium nitride ($Li_xN_y$, where $0 < x < 4$, and $0 < y < 2$); $SiS_2$ glass ($Li_xSi_yS_z$, where $0 \le x < 3$, $0 < y < 2$, and $0 < z < 4$); $P_2S_5$ glass ($Li_xP_yS_z$, where $0 \le x < 3$, $0 < y < 3$, and $0 < z < 7$); or garnet ceramics ($Li_{3+x}La_3M_2O_{12}$, where $0 \le x \le 5$, and M is at least one of Te, Nb, or Zr).

In some embodiments, the first negative electrode framework layer, the second negative electrode framework layer, and the third negative electrode framework layer each are independently made of a composite material, where the composite material is any combination of two or more of the following materials: a polymer material, a carbon material, a metal material, and an inorganic material. For example, the negative electrode framework may include a basic framework made of a polymer material or a carbon material, and an inorganic material further deposited on the basic framework. In some embodiments, the inorganic material covers, in the form of particles or coatings, an inner surface and an outer surface of a porous structure of the material. In some embodiments, the inorganic material includes at least one of the following: $HfO_2$, $SrTiO_3$, $SnO_2$, $CeO_2$, MgO, NiO, CaO, BaO, ZnO, $ZrO_2$, $Y_2O_3$, $Al_2O_3$, $TiO_2$, $SiO_2$, CuO, or AgO. In at least one aspect, the inorganic material can serve as a precipitation site for guiding lithium precipitation inside the porous structure.

In some embodiments, a preparation method for the composite material may be a common preparation method in the art, including but not limited to an atomic layer deposition (Atomic layer deposition, ALD) technology, an electrochemical deposition method, and the like.

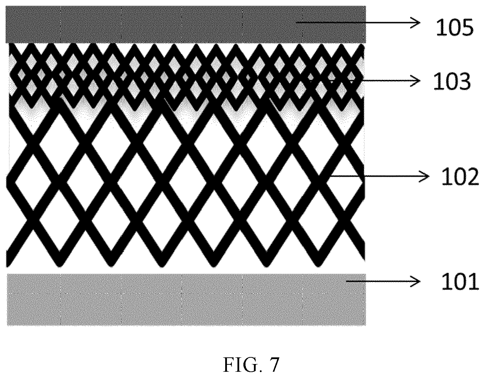

In some embodiments, the negative electrode plate further includes one or more negative electrode protection layers located on a surface of the negative electrode framework. As shown in FIG. 7, one or more negative electrode protection layers 105 may be further formed on the surface of the second negative electrode framework layer 103. As the name implies, the negative electrode protection layer is intended to protect the negative electrode. For example, the negative electrode protection layer 105 can avoid contact between an electrolyte and lithium metal as negative electrode active substance, thereby greatly reducing side reactions between the electrolyte and the lithium metal and improving cycling stability of the electrochemical apparatus. In addition, it should be noted that a framework of the second negative electrode framework layer is denser than a porous structure of the first negative electrode framework layer, which reduces difficulty of forming a negative electrode protection layer and helps further form a dense negative electrode protection layer on the surface of the negative electrode framework.

In some embodiments, a porosity of the negative electrode protection layer ranges from approximately 0% to approximately 10%.

In some embodiments, a material used for the negative electrode protection layer includes at least one of the following: inorganic substance, silicon, metal, or organic substance.

In some embodiments, the inorganic substance includes at least one of the following: lithium phosphate ($Li_3PO_4$); LiPON; $Li_2O$; LiF; LiOH; $Li_2CO_3$; $LiAlO_2$; $Li_4SiO_4$; $Li_2O$-$Al_2O_3$-$SiO_2$-$P_2O_5$-$TiO_2$-$GeO_2$ ceramics; lithium titanium phosphate ($Li_xTi_y(PO_4)_3$, where $0 < x < 2$, and $0 < y < 3$); lithium aluminum titanium phosphate ($Li_xAl_yTi_z(PO_4)_3$, where $0 < x < 2$, $0 < y < 1$, and $0 < z < 3$); $Li_{1+x+y}(Al, Ga)_x(Ti, Ge)_{2-x}Si_yP_{3-y}O_{12}$, where $0 \le x \le 1$, and $0 \le y \le 1$); lithium lanthanum titanate ($Li_xLa_yTiO_3$, where $0 < x < 2$, and $0 < y < 3$); lithium germanium thiophosphate ($Li_xGe_yP_zS_w$, where $0 < x < 4$, $0 < y < 1$, $0 < z < 1$, and $0 < w < 5$); lithium nitride ($Li_xN_y$, where $0 < x < 4$, and $0 < y < 2$); $SiS_2$ glass ($Li_xSi_yS_z$, where $0 \le x < 3$, $0 < y < 2$, and $0 < z < 4$); $P_2S_5$ glass ($Li_xP_yS_z$, where $0 \le x < 3$, $0 < y < 3$, and $0 < z < 7$); or garnet ceramics ($Li_{3+x}La_3M_2O_{12}$, where $0 \le x \le 5$, and M is at least one of Te, Nb, or Zr).

In some embodiments, the metal includes at least one of the following: Au, Pt, Ag, Al, In, Sn, or an alloy composed of two or more of the foregoing materials.

In some embodiments, the organic substance includes at least one of the following: polyethylene oxide (PEO), polyvinylidene fluoride (PVDF), polymethyl methacrylate (PMMA), polypropylene carbonate (PPC), polyethylene carbonate (PEC), polycaprolactone (PCL), tetraethylene glycol diacrylate (tetraethylene glycol diacrylate, TEGDA), perfluorosulfonic acid resin (Nafion), polyacrylonitrile (PAN), polydimethylsiloxane (PDMS), or derivatives of the foregoing organic substance.

Some embodiments of this application provide an electrochemical apparatus, where the electrochemical apparatus includes the negative electrode plate of the foregoing embodiments. In addition, the electrochemical apparatus further includes a positive electrode plate, and a separator between the positive electrode plate and the negative electrode plate. The positive electrode plate or the separator is not particularly limited, and may be a positive electrode plate or a separator commonly used in the art. In some embodiments, the electrochemical apparatus is a lithium-ion battery.

According to some embodiments of this application, the positive electrode plate includes a positive electrode current collector and a positive electrode active substance layer on a surface of the positiveelectrode current collector, where the positive electrode active substance layer includes a positive electrode active material, a conductive agent, and a binder. In some embodiments, the positive electrode current collector includes, but is not limited to, aluminum foil or nickel foil.

In some embodiments, examples of the positive electrode active material may include, but are not limited to, at least one of lithium cobalt oxide, lithium iron phosphate, lithium manganese iron phosphate, sodium iron phosphate, lithium vanadium phosphate, sodium vanadium phosphate, lithium vanadyl phosphate, sodium vanadyl phosphate, lithium vanadate, lithium manganate oxide, lithium nicotinate, lithium nickel cobalt manganate, lithium-rich manganese-based material, lithium nickel cobalt aluminate, and lithium titanate.

In the positive electrode active material, a chemical formula of the lithium cobalt oxide may be $Li_aCo_bM_{1c}O_{2-d}$, where $M_1$ includes at least one of nickel (Ni), manganese (Mn), magnesium (Mg), aluminum (Al), boron (B), titanium (Ti), vanadium (V), chromium (Cr), iron (Fe), copper (Cu), zinc (Zn), molybdenum (Mo), tin (Sn), calcium (Ca), strontium (Sr), tungsten (W), yttrium (Y), lanthanum (La), zirconium (Zr). or silicon (Si); and values of a, b, c, and d are respectively within the following ranges: $0.8 \le a \le 1.2$, $0.8 \le b \le 1$, $0 \le c \le 0.2$, and $-0.1 \le d \le 0.2$.

In the positive electrode active material, a chemical formula of the lithium nickelate may be $Li_eNi_fM_{2g}O_{2-h}$, where $M_2$ includes at least one of cobalt (Co), manganese (Mn), magnesium (Mg), aluminum (Al), boron (B), titanium (Ti), vanadium (V), chromium (Cr), iron (Fe), copper (Cu), zinc (Zn), molybdenum (Mo), tin (Sn), calcium (Ca), strontium (Sr), tungsten (W), zirconium (Zr), or silicon (Si); and values of e, f, g, and h are respectively within the following ranges: $0.8 \le e \le 1.2$, $0.3 \le f \le 0.98$, $0.02 \le g \le 0.7$, and $\le h \le 0.2$.

In the positive electrode active material, a chemical formula of the lithium manganate is $Li_iMn_{2-j}M_{3j}O_{4-k}$, where $M_3$ includes at least one of cobalt (Co), nickel (Ni), magnesium (Mg), aluminum (Al), boron (B), titanium (Ti), vanadium (V), chromium (Cr), iron (Fe), copper (Cu), zinc (Zn), molybdenum (Mo), tin (Sn), calcium (Ca), strontium (Sr), or tungsten (W); and values of i, j, and k are respectively within the following ranges: $0.8 \le i \le 1.2$, $0 \le j < 1.0$, and $-0.2 \le k \le 0.2$.

In the positive electrode active material, a chemical formula of the lithium nickel cobalt manganate is $LiNi_iCo_mMn_nO_2$, where values of 1, m, and n are respectively within the following ranges: $0 < 1 < 1.0$, $0 < m < 1.0$, $0 < n < 1.0$, and $1 + m + n = 1$.

In some embodiments, the conductive agent includes at least one of conductive carbon black, carbon fiber, acetylene black, Ketjen black, graphene, and carbon nanotubes. Persons skilled in the art should understand that various positive electrode plates widely used in lithium-ion batteries are applicable to this application without limitation.

According to some embodiments of this application, the separator includes, but is not limited to, at least one of polyethylene, polypropylene, polyethylene terephthalate, polyimide, or aramid. For example, polyethylene includes at least one component of high-density polyethylene, low-density polyethylene, or ultra-high-molecular-weight polyethylene. Particularly, polyethylene and polypropylene have a good effect on preventing short circuits, and can improve the stability of a battery through a shutdown effect. Persons skilled in the art should understand that various separators widely used in lithium-ion batteries are applicable to this application.

According to some embodiments of this application, the lithium-ion battery further includes an electrolyte, where the electrolyte may be in a gel state or a liquid state, and the electrolyte includes a lithium salt and a non-aqueous solvent.

In some embodiments, the lithium salt includes at least one of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, $LiBOB$, or lithium difluoroborate. For example, $LiPF_6$ is selected as the lithium salt because it can provide a high ionic conductivity and improve cycling performance.

In some embodiments, the non-aqueous solvent may be a carbonate compound, a carboxylate compound, an ether compound, another organic solvent, or a combination thereof.

In some embodiments, the carbonate compound may be a linear carbonate compound, a cyclic carbonate compound, a fluorocarbonate compound, or a combination thereof.

In some embodiments, an example of the linear carbonate compound is diethyl carbonate, dimethyl carbonate, dipropyl carbonate, methyl propyl carbonate, ethyl propyl carbonate, methyl ethyl carbonate, or a combination thereof. An example of the cyclic carbonate compound is ethylene carbonate, propylene carbonate, butylene carbonate, vinyl ethylene carbonate, propyl propionate, or a combination thereof. An example of the fluorocarbonate compound is fluoroethylene carbonate, 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, or a combination thereof.

In some embodiments, an example of the carboxylate compound is methyl acetate, ethyl acetate, n-propyl acetate, tert-butyl acetate, methyl propionate, ethyl propionate, γ-butyrolactone, decanolide, valerolactone, mevalonolactone, caprolactone, methyl formate, or a combination thereof.

In some embodiments, an example of the ether compound is dibutyl ether, tetraglyme, diglyme, 1,2-dimethoxyethane, 1,2-diethoxyethane, ethoxymethoxy ethane, 2-methyltetrahydrofuran, tetrahydrofuran, or a combination thereof.

In some embodiments, an example of the another organic solvent is dimethyl sulfoxide, 1,2-dioxolane, sulfolane, methyl sulfolane, 1,3-dimethyl-2-imidazolidinone, N-methyl -2-pyrrolidone, formamide, dimethylformamide, acetonitrile, trimethyl phosphate, triethyl phosphate, trioctyl phosphate, phosphate ester, or a combination thereof.

Some embodiments of this application provide a lithium-ion battery preparation method. The method includes: winding a sequential arrangement of the positive electrode plate, the separator, and the negative electrode plate of this application or stacking them in sequence to form a battery cell; and then placing the battery cell into, for example, an aluminum-plastic film, injecting an electrolyte, and performing formation and packaging, so that a lithium-ion battery is obtained.

Persons skilled in the art will understand that the battery cell structure and the lithium-ion battery preparation method described above are only example embodiments. Without departing from the content disclosed in this application, other methods commonly used in the art may be used as preparation methods for a lithium-ion battery or other electrochemical apparatuses.

Persons skilled in the art will understand that, although the lithium-ion battery is used as an example for description above, the electrochemical apparatus of this application further includes any other appropriate electrochemical apparatuses. Without departing from the content disclosed in this application, the electrochemical apparatus in the embodiments of this application includes any apparatus in which an electrochemical reaction takes place. Specific examples of the apparatus include all kinds of primary batteries, secondary batteries, solar batteries, or capacitors. Particularly, the electrochemical apparatus is a lithium secondary battery, including a lithium-metal secondary battery, a lithium-ion secondary battery, a lithium-polymer secondary battery, or a lithium-ion polymer secondary battery.

The electrochemical apparatus of this application is not particularly limited to any purpose and may be used for any known purposes in the prior art. According to some embodiments of this application, an electronic apparatus including the electrochemical apparatus of this application includes but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, and a lithium-ion capacitor.

The technical solutions of the present invention are further described below with reference to Comparative Examples and Examples, but are not limited thereto. Persons skilled in the art will understand that the preparation methods described in this application are only example embodiments, and any modifications or replacements made to the technical solutions of the present invention without departing from the scope of the technical solutions of the present invention shall fall within the protection scope of the present invention.

**Examples**

**Preparation of positive electrode plate**

Lithium iron phosphate (LiFePO$_4$) as a positive electrode active material, conductive carbon black (Super P), and polyvinylidene fluoride (PVDF) were mixed at a weight ratio of 97.5:1.0:1.5, N-methylpyrrolidone (NMP) was added as a solvent to prepare a slurry with a solid content of 55%, and the slurry was well stirred. The slurry was uniformly applied on a positive electrode current collector aluminum foil and dried at 90°C to obtain a positive electrode plate. A loading amount of the positive electrode was 1 mAh/cm$^2$. After coating was completed, the electrode plate was cut into a size of 38 mm×58 mm for use.

**Preparation of electrolyte**

In an atmosphere of dry argon, first, 1,3-dioxolane (DOL) and dimethyl ether (DME) were mixed at a volume ratio of 1:1, and then lithium bis-trifluoromethanesulfonimide (LiTFSI) was added to the organic solvent as a lithium salt for dissolution and mixed evenly to obtain an electrolyte with a lithium salt concentration of 1 M.

**Preparation of lithium-ion battery**

Polyethylene with a thickness of 15 $\mu$m was used as a separator, and a double-layer coated negative electrode plate, a separator, and a single-layer coated positive electrode plate in examples and comparative examples were stacked in sequence. After stacking was completed, four corners of the entire laminated structure were fixed with a tape, and then the laminated structure was placed into an aluminum-plastic film, followed by top-side sealing, electrolyte injection, and packaging to finally obtain a lithium-metal laminated battery in the following examples and comparative examples.

**Test methods for material and lithium-ion battery**

**(1) Porosity test**

A to-be-tested framework was placed in an automatic mercury porosimeter (a model is AutoPore V9610) for testing to obtain a porosity of the sample. A pressure range is 0.5-30,000 psia.

**(2) Thickness test for negative electrode framework layer**

A to-be-tested electrode plate was cut into a size of approximately 10 mm×5 mm and put into an ion grinding and polishing machine to polish a cross section of the electrode plate. Then the obtained electrode plate was transferred to a scanning electronic microscope (SEM) for observing the polished cross section at an appropriate magnification rate and measure a thickness of the negative electrode framework layer.

**(3) Pre-precipitation amount test for lithium metal**

A to-be-tested electrode plate was punched into a small disc with a diameter of 14 mm and used as a positive electrode. Copper foil was punched into a small disc with a diameter of 18 mm and used as a negative electrode. Polyethylene with a thickness of 15 $\mu$m and a diameter of 20 mm was used as a separator, and 60 $\mu$L of the foregoing electrolyte was added to form a button battery. The button battery was charged at a current density of 0.1 mA/cm$^2$ and a charging voltage ranged from 0 V to 1 V. A pre-precipitation amount of lithium metal per unit area can be calculated by using a measured charging capacity in combination with a capacity per gram of lithium: 3860 mAh/g.

**(4) Cycling performance test for lithium-ion battery**

The laminated battery was charged and discharged at a rate of 0.1C for one cycle at 60°C to form the laminated battery, and then charge and discharge cycles were performed on the battery at room temperature. First, constant-current charging was performed on the battery, where a charge current was 1C, and a cut-off voltage was 3.8 V Then the battery was charged to a cut-off current of 0.05C at a constant voltage. Then constant-current discharging was performed on the battery, where a discharge current was 1C, and a cut-off voltage is 2.7 V. In this way, the cycles of the lithium-ion battery in comparative examples and examples were tested when a first discharge capacity was 80%.

**Preparation of negative electrode plate**

Example 1

Two polyacrylonitrile fiber layers were prepared by using an electrostatic spinning technology and by using polyacrylonitrile as a precursor. A first negative electrode framework layer (namely, an inner layer) had a porosity of 70% and a thickness of 45 $\mu$m. A second negative electrode framework layer (namely, an outer layer) had a porosity of 30% and a thickness of 5 $\mu$m. The two polyacrylonitrile fiber layers were heated at a temperature of 210°C for 1 hour in an atmospheric environment and then heated at a temperature of 900°C for 3 hours in an argon environment to obtain carbon films. A nickel-foil current collector, the first negative electrode framework layer, and the second negative electrode framework layer were sorted in the manner described in FIG. 5 of this application, and lithium foil was placed on two outer surfaces of the negative electrode framework and heated to 300°C to make lithium melt and enter the framework for pre-lithiation. Finally, the electrode plate was cut into a size of 40 mm×60 mm for use.

Example 2

A preparation method and raw materials were the same as those in Example 1, and a difference lied in that a porosity of a first negative electrode framework layer (namely, an inner layer) in Example 2 was 55%.

Example 3

A preparation method and raw materials were the same as those in Example 1, and a difference lied in that a porosity of a first negative electrode framework layer (namely, an inner layer) in Example 3 was 80%.

Example 4

A preparation method and raw materials were the same as those in Example 1, and a difference lied in that a porosity of a first negative electrode framework layer (namely, an inner layer) in Example 4 was 90%.

Example 5

A preparation method and raw materials were the same as those in Example 1, and a difference lied in that a porosity of a first negative electrode framework layer (namely, an inner layer) in Example 5 was 95%.

Example 6

A preparation method and raw materials were the same as those in Example 1, and a difference lied in that a porosity of a second negative electrode framework layer (namely, an outer layer) in Example 6 was 20%.

Example 7

A preparation method and raw materials were the same as those in Example 1, and a difference lied in that a porosity of a second negative electrode framework layer (namely, an outer layer) in Example 7 was 40%.

Example 8

A preparation method and raw materials were the same as those in Example 1, and a difference lied in that a porosity of a second negative electrode framework layer (namely, an outer layer) in Example 8 was 10%.

Comparative Example 1

A difference between Comparative Example 1 and Examples 1 to 8 lied in that no negative electrode framework was provided, lithium metal was only placed on a current collector, and the lithium metal and the current collector were tightly combined through rolling. A pre-lithiation thickness of lithium metal was 10 $\mu$m.

Comparative Example 2

A preparation method and raw materials were the same as those in Example 1, and a difference lied in that only negative electrode framework layers with a porosity of 30% and a thickness of 50 $\mu$m were provided on two surfaces of a current collector in Comparative Example 2.

Comparative Example 3

A preparation method and raw materials were the same as those in Example 1, and a difference lied in that only negative electrode framework layers with a porosity of 70% and a thickness of 50 $\mu$m were provided on two surfaces of a current collector in Comparative Example 3.

Experimental parameters and measurement results of Examples 1 to 8 and Comparative Examples 1 to 3 are shown in Table 1 below.

## Table 1

| | Inner-layer framework material | Outer-layer framework material | Inner-layer porosity | Outer-layer porosity | Pre-lithiation amount of lithium metal(mg/cm$^2$) | Cycles at a capacity retention rate of 80% |
|---|---|---|---|---|---|---|
| Example 1 | C | C | 70% | 30% | 1.14 | 245 |
| Example 2 | C | C | 55% | 30% | 0.85 | 160 |
| Example 3 | C | C | 80% | 30% | 1.35 | 260 |
| Example 4 | C | C | 90% | 30% | 1.53 | 290 |
| Example 5 | C | C | 95% | 30% | 1.63 | 145 |
| Example 6 | C | C | 70% | 20% | 1.14 | 220 |
| Example 7 | C | C | 70% | 40% | 1.17 | 225 |
| Example 8 | C | C | 70% | 10% | 1.11 | 190 |
| Comparative Example 1 | N/A | N/A | N/A | N/A | | 50 |
| Comparative Example 2 | C | C | 30% | 30% | 0.39 | 60 |
| Comparative Example 3 | C | C | 70% | 70% | 1.24 | 130 |

During pre-lithiation for a negative electrode framework, a pre-lithiation amount is related to a porosity of the negative electrode framework. Generally, when the porosity provided by the negative electrode framework is low, space available for lithium precipitation is small, and therefore the pre-lithiation amount is also correspondingly reduced. As shown in Table 1, electrochemical apparatuses prepared by using the negative electrode plates in Examples 1 to 8 of this application had higher cycling stability than electrochemical apparatuses prepared by using the negative electrode plates in Comparative Examples 1 to 3. In Comparative Example 1, an electrochemical apparatus had the lowest cycling stability because no framework was constructed for lithium metal. In Comparative Examples 2 and 3, one layer of framework was constructed (which can also be understood as that two layers of frameworks with the same porosity were constructed), and cycling stability of an electrochemical apparatus was improved compared with that in Comparative Example 1. However, in Examples 1 to 8 of this application, two layers of frameworks with different porosities were constructed, where the inner-layer porosity was higher than the outer-layer porosity, so that cycling stability of an electrochemical apparatus could be further improved compared with that in Comparative Examples 2 and 3.

In addition, it can be learned from comparison between Example 5 and other examples that cycling stability of an electrochemical apparatus in Example 5 was poorer. This was mainly because the inner-layer porosity in Example 5 was too high, and no strong support could be provided for precipitation of lithium metal. However, even so, the cycling stability of the electrochemical apparatus in Example 5 was still higher than that in Comparative Examples 1 to 3.

Example 9

Copper foam with a porosity of 70% was used as a first negative electrode framework layer (namely, an inner layer) with a thickness of 45 $\mu$m, and copper foam with a porosity of 30% was used as a second negative electrode framework layer (namely, an outer layer) with a thickness of 5 $\mu$m. A nickel-foil current collector, the first negative electrode framework layer, and the second negative electrode framework layer were sorted in the manner described in FIG. 5 of this application, and lithium foil was placed on two outer surfaces of the negative electrode framework and heated to 300°C to make lithium melt and enter the framework for pre-lithiation. Finally, the electrode plate was cut into a size of 40 mm×60 mm for use.

Example 10

A preparation method and raw materials were the same as those in Example 9, and a difference lied in that a porosity of a first negative electrode framework layer (namely, an inner layer) in Example 10 was 80%.

Example 11

Two polyimide fiber layers were prepared by using an electrostatic spinning technology and by using polyimide as a precursor. A first negative electrode framework layer (namely, an inner layer) had a porosity of 70% and a thickness of 45 $\mu$m. A second negative electrode framework layer (namely, an outer layer) had a porosity of 30% and a thickness of 5 $\mu$m. A nickel-foil current collector, the first negative electrode framework layer, and the second negative electrode framework layer were sorted in the manner described in FIG. 5 of this application, and lithium foil was placed on two outer surfaces of the negative electrode framework and heated to 300°C to make lithium melt and enter the framework for pre-lithiation. Finally, the electrode plate was cut into a size of 40 mm×60 mm for use.

Example 12

A preparation method and raw materials were the same as those in Example 11, and a difference lied in that a porosity of a first negative electrode framework layer (namely, an inner layer) in Example 12 was 80%.

Example 13

Copper foam with a porosity of 70% was used as a first negative electrode frame layer (namely, an inner layer) with a thickness of 45 $\mu$m. A fiber layer with a porosity of 30% was prepared by using an electrostatic spinning technology and by using polyacrylonitrile as a precursor, and was used as a second negative electrode framework layer (namely, an outer layer) with a thickness of 5 $\mu$m. The polyacrylonitrile fiber layer was heated at a temperature of 210° C for 1 hour in an atmospheric environment, and then heated at a temperature of 900°C for 3 hours in an argon environment to obtain a carbon film with a thickness of 5 $\mu$m. A nickel-foil current collector, the first negative electrode framework layer, and the second negative electrode framework layer were sorted in the manner described in FIG. 5 of this application, and lithium foil was placed on two outer surfaces of the negative electrode framework and heated to 300°C to make lithium melt and enter the framework for pre-lithiation. Finally, the electrode plate was cut into a size of 40 mm×60 mm for use.

Example 14

A preparation method and raw materials were the same as those in Example 13, and a difference lied in that a porosity of a first negative electrode framework layer (namely, an inner layer) in Example 14 was 80%.
Experimental parameters and measurement results of Examples 9 to 14 are shown in Table 2 below.

## Table 2

| | Inner-layer framework material | Outer-layer framework material | Inner-layer porosity | Outer-layer porosity | Precipitation amount of lithium metal | Cycles at a capacity retention rate of 80% |
|---|---|---|---|---|---|---|
| Example 9 | Cu | Cu | 70% | 30% | 1.14 | 120 |
| Example 10 | Cu | Cu | 80% | 30% | 1.35 | 135 |
| Example 11 | Polyimide | Polyimide | 70% | 30% | 1.14 | 240 |
| Example 12 | Polyimide | Polyimide | 80% | 30% | 1.35 | 245 |
| Example 13 | Cu | C | 70% | 30% | 1.14 | 160 |
| Example 14 | Cu | C | 80% | 30% | 1.35 | 170 |

Carbon materials were used for the inner and outer layers of the negative electrode frameworks in Examples 1 to 8. In contrast, metal materials (for example, Cu) and polymer materials (for example, polyimide) were used to prepare the negative electrode frameworks in Examples 9 to 14. Compared with Comparative Example 1, cycling performance of electrochemical apparatuses in Examples 9 to 14 was improved, which indicated that the negative electrode frameworks prepared by using the metal materials and the polymer materials could provide a precipitation framework and support for lithium metal like carbon materials. However, when the metal Cu was used to prepare the negative electrode framework, cycling stability of an obtained electrochemical apparatus was slightly poorer than that of an electrochemical apparatus with the negative electrode framework layer prepared by using the carbon materials and/or the polymer materials. This was mainly because Cu had poor infiltrability for lithium, and lithium precipitation tended to occur on a surface of the electrode plate in an electrochemical charge and discharge cycling process; as a result, the negative electrode framework could not fully perform its functions. If an infiltration layer or a protection layer, for example, an oxide layer, is added to the surface of Cu, the cycling stability of the electrochemical apparatus is to be greatly improved (for example, refer to electrochemical data in Examples 16 and 18 below).

Example 15

Example 15 was an improvement of Example 1 on the basis of Example 1. A specific improvement aspect was as follows: After the two polyacrylonitrile fiber layers were heated to obtain the carbon films, a zinc oxide coating with a thickness of 20 nm was applied on inner and outer surfaces of pore structures of the carbon films by using an atomic layer deposition technology.

Example 16

Example 16 was an improvement of Example 9 on the basis of Example 9. A specific improvement aspect was as follows: An aluminum oxide coating with a thickness of 20 nm was applied on inner and outer surfaces of pore structures of the two copper foam materials by using an atomic layer deposition technology.

Example 17

Example 17 was an improvement of Example 11 on the basis of Example 11. A specific improvement aspect was as follows: A copper oxide coating with a thickness of 20 nm was applied on inner and outer surfaces of pore structures of the polyimide fiber layers by using an atomic layer deposition technology.

Example 18

Example 18 was an improvement of Example 13 on the basis of Example 13. A specific improvement aspect was as follows: A titanium dioxide coating with a thickness of 20 nm was applied on inner and outer surfaces of pore structures of the carbon film and the copper foam by using an atomic layer deposition technology.

Experimental parameters and measurement results of Examples 15 to 18 are shown in Table 3 below.

## Table 3

| | Inner-layer framework material | Outer-layer framework material | Inner-layer porosity | Outer-layer porosity | Precipitation amount of lithium metal | Inorganic material on the negative electrode framework | Cycles at a capacity retention rate of 80% |
|---|---|---|---|---|---|---|---|
| Example 15 | C | C | 70% | 30% | 1.14 | ZnO | 265 |
| Example 16 | Cu | Cu | 70% | 30% | 1.14 | $Al_2O_3$ | 260 |
| Example 17 | Polyimide | Polyimide | 70% | 30% | 1.14 | CuO | 255 |
| Example 18 | Cu | C | 70% | 30% | 1.14 | $TiO_2$ | 300 |

In Examples 15 to 18, a layer of inorganic substance (for example, ZnO, $Al_2O_3$, CuO, or $TiO_2$) was further applied on inner and outer surfaces of pore structures of the frameworks formed in Examples 1, 9, 11, and 13. That is, structures of the negative electrode frameworks in Examples 15 to 18 may be described as follows: First, a basic negative electrode framework was formed by using a carbon material, a metal material, or a polymer material, and then an inorganic material was formed on inner and outer surfaces of a pore structure of the formed basic negative electrode framework. That is, the negative electrode frameworks in Examples 15 to 18 were made of composite materials. Correspondingly, by comparing the electrochemical data of Examples 15 to 18 with that of Examples 1, 9, 11, and 13, it can be learned that cycling stability of an electrochemical apparatus could be further improved by further wrapping or depositing an inorganic material on the inner and outer surfaces of the pore structure of the framework.

Example 19

Example 19 was an improvement of Example 1 on the basis of Example 1. A specific improvement aspect was as follows: After pre-lithiation was completed, an LiF negative electrode protection layer with a thickness of 1 $\mu$m was deposited on a surface of the second negative electrode framework layer through magnetron sputtering. For a schematic diagram of a specific structure, refer to FIG. 7.

Example 20

Example 20 was an improvement of Example 19 on the basis of Example 19. A specific improvement aspect was as follows: A ZnO coating with a thickness of 20 nm was applied on inner and outer surfaces of a pore structure of the negative electrode framework by using an atomic layer deposition technology.

Examples 21 and 22

A difference between Examples 21 and 22 and Example 20 lied in that the material of the negative electrode protection layer was replaced with metal In and organic substance PEO respectively.

Example 23

Example 23 was an improvement of Example 9 on the basis of Example 9. A specific improvement aspect was as follows: After pre-lithiation was completed, an LiF negative electrode protection layer with a thickness of 1 $\mu$m was deposited on a surface of the second negative electrode framework layer through magnetron sputtering.

Example 24

Example 24 was an improvement of Example 23 on the basis of Example 23. A specific improvement aspect was as follows: A ZnO coating with a thickness of 20 nm was applied on inner and outer surfaces of a pore structure of the negative electrode framework by using an atomic layer deposition technology.

Examples 25 and 26

A difference between Examples 25 and 26 and Example 24 lied in that the material of the negative electrode protection layer was replaced with metal In and organic substance PEO respectively.

Example 27

Example 27 was an improvement of Example 11 on the basis of Example 11. A specific improvement aspect was as follows: After pre-lithiation was completed, an LiF negative electrode protection layer with a thickness of 1 $\mu$m was deposited on a surface of the second negative electrode framework layer through magnetron sputtering.

Example 28

Example 28 was an improvement of Example 27 on the basis of Example 27. A specific improvement aspect was as follows: A ZnO coating with a thickness of 20 nm was applied on inner and outer surfaces of a pore structure of the negative electrode framework by using an atomic layer deposition technology.

Examples 29 and 30

A difference between Examples 29 and 30 and Example 28 lied in that the material of the negative electrode protection layer was replaced with metal In and organic substance PEO respectively.

Example 31

Example 31 was an improvement of Example 13 on the basis of Example 13. A specific improvement aspect was as follows: After pre-lithiation was completed, an LiF negative electrode protection layer with a thickness of 1 $\mu$m was deposited on a surface of the second negative electrode framework layer through magnetron sputtering.

Example 32

Example 32 was an improvement of Example 31 on the basis of Example 31. A specific improvement aspect was as follows: A ZnO coating with a thickness of 20 nm was applied on inner and outer surfaces of a pore structure of the negative electrode framework by using an atomic layer deposition technology.

Negative electrode Examples 33 and 34

A difference between Examples 33 and 34 and Example 33 lied in that the material of the negative electrode protection layer was replaced with metal In and organic substance PEO respectively.

Experimental parameters and measurement results of Examples 19 to 34 are shown in Table 4 below.

**Table 4**

| | Inner-layer framework material | Outer-layer framework material | Inner-layer porosity | Outer-layer porosity | Precipitation amount of lithium metal | Inorganic material on the negative electrode framework | Material of the negative electrode protection layer | Cycles at a capacity retention rate of 80% |
|---|---|---|---|---|---|---|---|---|
| Example 19 | C | C | 70% | 30% | 1.14 | N/A | LiF | 290 |
| Example 20 | C | C | 70% | 30% | 1.14 | ZnO | LiF | 320 |
| Example 21 | C | C | 70% | 30% | 1.14 | ZnO | In | 275 |
| Example 22 | C | C | 70% | 30% | 1.14 | ZnO | PEO | 300 |
| Example 23 | Cu | Cu | 70% | 30% | 1.14 | N/A | LiF | 255 |
| Example 24 | Cu | Cu | 70% | 30% | 1.14 | ZnO | LiF | 300 |
| Example 25 | Cu | Cu | 70% | 30% | 1.14 | ZnO | In | 270 |
| Example 26 | Cu | Cu | 70% | 30% | 1.14 | ZnO | PEO | 290 |
| Example 27 | Polyimide | Polyimide | 70% | 30% | 1.14 | N/A | LiF | 270 |
| Example 28 | Polyimide | Polyimide | 70% | 30% | 1.14 | ZnO | LiF | 305 |

| | Inner-layer framework material | Outer-layer framework material | Inner-layer porosity | Outer-layer porosity | Precipitation amount of lithium metal | Inorganic material on the negative electrode framework | Material of the negative electrode protection layer | Cycles at a capacity retention rate of 80% |
|---|---|---|---|---|---|---|---|---|
| Example 29 | Polyimide | Polyimide | 70% | 30% | 1.14 | ZnO | In | 275 |
| Example 30 | Polyimide | Polyimide | 70% | 30% | 1.14 | ZnO | PEO | 295 |
| Example 31 | Cu | C | 70% | 30% | 1.14 | N/A | LiF | 295 |
| Example 32 | Cu | C | 70% | 30% | 1.14 | ZnO | LiF | 350 |
| Example 33 | Cu | C | 70% | 30% | 1.14 | ZnO | In | 305 |
| Example 34 | Cu | C | 70% | 30% | 1.14 | ZnO | PEO | 330 |

In Examples 19, 23, 27, and 31, negative electrode protection layers were deposited on surfaces of the negative electrode frameworks in Examples 1, 9, 11, and 13 respectively. Compared with that in Examples 1, 9, 11, and 13, cycling stability in Examples 19, 23, 27, and 31 was further improved. This was because the negative electrode protection layer could effectively protect the negative electrode framework and the negative electrode active substance, reduce or even avoid contact between the lithium metal and the electrolyte, greatly reduce side reactions between the lithium metal and the electrolyte, and improve cycling stability of electrode and the electrochemical apparatus.

Examples 20, 24, 28, and 32 were compared with Examples 19, 23, 27, and 31, respectively. An improvement of the negative electrode plates in Examples 20, 24, 28, and 32 lied in that the ZnO coating was further applied on the basic negative electrode framework. In addition, by comparing the electrochemical data, it can be learned that further deposition of the inorganic material on the basic negative electrode framework helped further improve the cycling stability of the electrochemical apparatus. In Examples 21 and 22, Examples 25 and 26, Examples 29 and 30, and Examples 33 and 34, metal materials and polymer materials were selected as negative electrode protective layers respectively. With reference to the electrochemical data of these examples, it can be learned that the metal materials and the polymer materials could well protect the negative electrode framework and the negative electrode active substance like inorganic materials.

With the foregoing descriptions of examples and comparative examples of this application, it should be understood that this application provides a novel negative electrode plate, and an electrochemical apparatus and an electronic apparatus including the negative electrode plate. Specifically, this application provides two or more negative electrode framework layers for a lithium-metal negative electrode, where a negative electrode framework layer close to a current collector has a higher porosity, and a negative electrode framework layer away from the current collector has a lower porosity. With this design, side reactions between lithium metal and an electrolyte can be reduced, formation of lithium dendrites can be inhibited, and drastic swelling and contraction of the negative electrode plate in volume due to intercalation and deintercalation of lithium ions can be greatly alleviated or even eliminated, thereby improving safety and stability of the electrochemical apparatus.

In the specification of this application, reference to "an embodiment", "some embodiments", "one embodiment", "another example", "an example", "a specific example", or "some examples" means that at least one embodiment or example in the embodiments of this application includes a specific feature, structure, material, or characteristic described in this embodiment or example. Therefore, descriptions appearing in the specification such as "in some embodiments", "in the embodiments", "in an embodiment", "in another example", "in an example", "in a particular example", or "for example" are not necessarily references to the same embodiments or examples in the embodiments of this application. In addition, specific features, structures, materials, or characteristics herein may be incorporated in any suitable manner into one or more embodiments or examples.

This specification summarizes the features of several embodiments, so that persons of ordinary skill in the art can better understand various aspects of this application. Persons of ordinary skill in the art can easily use this application as a basis to design or modify the content to achieve the same objectives and/or the same advantages of the embodiments claimed herein.

Although illustrative embodiments have been demonstrated and described, persons skilled in the art should understand that the foregoing embodiments are not to be construed as limitations on this application, and that the embodiments may be changed, replaced, and modified without departing from the spirit, principle, and scope of this application.

**Claims**

1.  A negative electrode plate, comprising:

    a current collector; and
    a negative electrode framework located on the current collector; wherein
    the negative electrode framework comprises at least a first negative electrode framework layer and a second negative electrode framework layer, and the first negative electrode framework layer is located between the current collector and the second negative electrode framework layer; and
    a porosity of the first negative electrode framework layer is higher than a porosity of the second negative electrode framework layer.

2.  The negative electrode plate according to claim 1, wherein the porosity of the first negative electrode framework layer ranges from 55% to 90%.

3.  The negative electrode plate according to claim 1, wherein the porosity of the second negative electrode framework layer ranges from 10% to 50%.

4.  The negative electrode plate according to claim 1, wherein a thickness of the negative electrode framework and the porosity satisfy the following relationships:

$$5 \le \int_0^t p\, dx \le 50$$

$$\int_0^t \frac{\partial p}{\partial x}\, dx < 0$$

$$20\% \le p \le 90\%$$

$$5 \le t \le 100$$

    t is a total thickness/$\mu$m of the negative electrode framework, x is a distance (integral element)/$\mu$m from a surface of the current collector to any plane that is in the negative electrode framework and that is parallel to the surface of the current collector, and p is a porosity of the negative electrode framework.

5.  The negative electrode plate according to claim 1, further comprising lithium metal intercalated in the negative electrode framework, wherein an amount of the lithium metal is 0.001 to 6 mg/cm$^2$.

6.  The negative electrode plate according to claim 1, wherein the first negative electrode framework layer and the second negative electrode framework layer each independently comprise at least one of the following materials: a polymer material, a carbon material, a metal material, or an inorganic material.

7. The negative electrode plate according to claim 6, wherein

the polymer material comprises at least one of the following: polyethylene oxide, polyimide, polyacrylic acid, polyethylene, polypropylene, polyacrylonitrile, polystyrene, polyvinyl fluoride, polyether-ether-ketone, polyester, polyvinylidene chloride, polytetrafluoroethylene, polyethylene terephthalate, or a derivative of one or more of the foregoing materials;

the carbon material comprises at least one of the following: porous carbon, carbon nanotube, carbon fiber, graphene and derivatives thereof, or hollow carbon beads;

the metal material comprises at least one of the following: copper, nickel, chromium, titanium, tungsten, zirconium, or an alloy composed of two or more of the foregoing materials; and

the inorganic material comprises at least one of the following:

$Li_3PO_4$;

LiPON;

$Li_2O$;

LiF;

LiOH;

$Li_2CO_3$;

$LiAlO_2$;

$Li_4SiO_4$;

$Li_2O\text{-}Al_2O_3\text{-}SiO_2\text{-}P_2O_5\text{-}TiO_2\text{-}GeO_2$ ceramics;

$Li_xTi_y(PO_4)_3$, wherein $0 < x < 2$, and $0 < y < 3$;

$Li_xAl_yTi_z(PO_4)_3$, wherein $0 < x < 2$, $0 < y < 1$, and $0 < z < 3$;

$Li_{1+x+y}(Al, Ga)_x(Ti, Ge)_{2-x}Si_yP_{3-y}O_{12}$, wherein $0 \leq x \leq 1$, and $0 \leq y \leq 1$;

$Li_xLa_yTiO_3$, wherein $0 < x < 2$, and $0 < y < 3$;

$Li_xGe_yP_zS_w$, wherein $0 < x < 4$, $0 < y < 1$, $0 < z < 1$, and $0 < w < 5$;

$Li_xN_y$, wherein $0 < x < 4$, and $0 < y < 2$;

$Li_xSi_yS_z$, wherein $0 \leq x < 3$, $0 < y < 2$, and $0 < z < 4$;

$Li_xP_yS_z$, wherein $0 \leq x < 3$, $0 < y < 3$, and $0 < z < 7$; or

$Li_{3+x}La_3M_2O_{12}$, wherein $0 \leq x \leq 5$, and M is at least one of Te, Nb, or Zr.

8. The negative electrode plate according to claim 1, wherein the negative electrode framework further comprises an inorganic material precipitated on the negative electrode framework.

9. The negative electrode plate according to claim 8, wherein the inorganic material comprises at least one of the following: $HfO_2$, $SrTiO_3$, $SnO_2$, $CeO_2$, MgO, NiO, CaO, BaO, ZnO, $ZrO_2$, $Y_2O_3$, $Al_2O_3$, $TiO_2$, $SiO_2$, CuO, orAgO.

10. The negative electrode plate according to claim 1, further comprising one or more negative electrode protection layers located on the negative electrode framework.

11. The negative electrode plate according to claim 10, wherein a porosity of the negative electrode protection layer is approximately 0% to 10%.

12. The negative electrode plate according to claim 10, wherein a material used for the negative electrode protection layer comprises at least one of the following: inorganic substance, silicon, metal, or organic substance.

13. The negative electrode plate according to claim 12, wherein the inorganic substance comprises at least one of the following:

$Li_3PO_4$;

LiPON;

$Li_2O$;

LiF;

LiOH;

$Li_2CO_3$;

$LiAlO_2$;

$Li_4SiO_4$;

$Li_2O\text{-}Al_2O_3\text{-}SiO_2\text{-}P_2O_5\text{-}TiO_2\text{-}GeO_2$ ceramics;

$Li_xTi_y(PO_4)_3$, wherein $0 < x < 2$, and $0 < y < 3$;

$Li_xAl_yTi_z(PO_4)_3$, wherein $0 < x < 2$, $0 < y < 1$, and $0 < z < 3$;

$Li_{1+x+y}(Al, Ga)_x(Ti, Ge)_{2-x}Si_yP_{3-y}O_{12}$, wherein $0 \leq x \leq 1$, and $0 \leq y \leq 1$;

$Li_xLa_yTiO_3$, wherein $0 < x < 2$, and $0 < y < 3$;

$Li_xGe_yP_zS_w$, wherein $0 < x < 4$, $0 < y < 1$, $0 < z < 1$, and $0 < w < 5$;

$Li_xN_y$, wherein $0 < x < 4$, and $0 < y < 2$;

$Li_xSi_yS_z$, wherein $0 \leq x < 3$, $0 < y < 2$, and $0 < z < 4$;

$Li_xP_yS_z$, wherein $0 \leq x < 3$, $0 < y < 3$, and $0 < z < 7$; or

$Li_{3+x}La_3M_2O_{12}$, wherein $0 \leq x \leq 5$, and M is at least one of Te, Nb, or Zr;

the metal comprises at least one of the following: Au, Pt, Ag, Al, In, Sn, or an alloy composed of two or more of the foregoing materials; and

the organic substance comprises at least one of the following: PEO, PVDF, PMMA, PPC, PEC, PCL, TEGDA, Nafion, PAN, PDMS, or derivatives of the foregoing organic substance.

14. An electrochemical apparatus, comprising the negative electrode plate according to any one of claims 1 to 13.

15. An electronic apparatus, comprising the electrochemical apparatus according to claim 14.

→ 101

FIG. 1

→ 101

→ 102

FIG. 2

FIG. 3

FIG. 4

→ 103

→ 102

→ 101

→ 102

→ 103

FIG. 5

→ 104

→ 103

→ 102

→ 101

FIG. 6

105

103

102

101

FIG. 7

**INTERNATIONAL SEARCH REPORT**

International application No.

**PCT/CN2020/082187**

**A. CLASSIFICATION OF SUBJECT MATTER**

H01M 4/64(2006.01)i; H01M 10/0525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI: 负极, 集流体, 骨架, 孔隙率, 枝晶, 安全, anode, current collector, framework, porosity, dendrite, safety

**C. DOCUMENTS CONSIDERED TO BE RELEVANT**

| Category* | Citation of document, with indication, where appropriate, of the relevant passages | Relevant to claim No. |
|---|---|---|
| X | CN 109994739 A (NINGDE AMPEREX TECHNOLOGY LTD.) 09 July 2019 (2019-07-09) description, paragraphs 33-100 | 1-3, 5-9, 14-15 |
| Y | CN 109994739 A (NINGDE AMPEREX TECHNOLOGY LTD.) 09 July 2019 (2019-07-09) description, paragraphs 33-100 | 10-15 |
| Y | CN 107394115 A (SAMSUNG ELECTRONICS CO., LTD. et al.) 24 November 2017 (2017-11-24) description, paragraphs 43-169 | 10-15 |
| X | CN 110867560 A (CONTEMPORARY AMPEREX TECHNOLOGY LTD.) 06 March 2020 (2020-03-06) description, paragraphs 10-60 | 1-3, 5-7 |
| A | CN 108448054 A (HEFEI GUOXUAN HIGH-TECH POWER ENERGY CO., LTD.) 24 August 2018 (2018-08-24) entire document | 1-15 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 December 2020** | **29 December 2020** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/082187**

| Patent document cited in search report | | | Publication date (day/month/year) | Patent family member(s) | | | Publication date (day/month/year) |
|---|---|---|---|---|---|---|---|
| CN | 109994739 | A | 09 July 2019 | US | 20200313174 | A1 | 01 October 2020 |
| | | | | WO | 2020192167 | A1 | 01 October 2020 |
| CN | 107394115 | A | 24 November 2017 | EP | 3240087 | A1 | 01 November 2017 |
| | | | | JP | 2017199678 | A | 02 November 2017 |
| | | | | EP | 3240087 | B1 | 19 June 2019 |
| | | | | US | 2017317352 | A1 | 02 November 2017 |
| | | | | KR | 20170124075 | A | 09 November 2017 |
| CN | 110867560 | A | 06 March 2020 | WO | 2020042571 | A1 | 05 March 2020 |
| CN | 108448054 | A | 24 August 2018 | | None | | |

Form PCT/ISA/210 (patent family annex) (January 2015)